# EUROPÄISCHE PATENTSCHRIFT

(11) **EP 1 243 044 B1**
(45) Veröffentlichungstag und Bekanntmachung des Hinweises auf die Patenterteilung: **07.04.2004**
(21) Anmeldenummer: 00988671.4
(22) Anmeldetag: 30.11.2000
(51) Int. Cl.: H01M 8/02

(54) **BRENNSTOFFZELLENBLOCK**
FUEL CELL BLOCK
BLOC DE PILES A COMBUSTIBLE

(30) Priorität: 16.12.1999 DE 19960815
(43) Veröffentlichungstag der Anmeldung: 25.09.2002
(73) Patentinhaber: SIEMENS AKTIENGESELLSCHAFT, 80333 München (DE)
(72) Erfinder: HARTNACK, Herbert, 91056 Erlangen (DE); LERSCH, Josef, 91336 Heroldsbach (DE); MATTEJAT, Arno, 91088 Bubenreuth (DE)
(86) Internationale Anmeldenummer: PCT/DE2000/004268
(87) Internationale Veröffentlichungsnummer: WO 2001/045187

(56) Entgegenhaltungen:
- EP-A- 0 591 800
- US-A- 4 124 478
- US-A- 5 108 849
- US-A- 5 750 281

## Beschreibung

Die Erfindung bezieht sich auf einen Brennstoffzellenblock, der in einem Stapel angeordnete Elemente und eine Anzahl in Stapelrichtung durch die Elemente verlaufende Axialkanäle umfaßt, wobei mindestens zwei benachbarte Elemente zwischen sich einen Zwischenraum bilden und zwischen den beiden Elementen oder in einem der beiden Elemente eine Anzahl mit dem Zwischenraum verbundener Radialkanäle ausgestaltet sind, wovon eine Anzahl den Zwischenraum mit mindestens einem Axialkanal verbindet, sodaß ein gasförmiges oder flüssiges Medium vom Axialkanal zum Zwischenraum oder umgekehrt strömen kann.

Es ist bekannt, daß bei der Elektrolyse von Wasser die Wassermoleküle durch elektrischen Strom in Wasserstoff (H₂) und Sauerstoff (O₂) zerlegt werden. In einer Brennstoffzelle läuft u.a. dieser Vorgang in umgekehrter Richtung ab. Durch eine elektrochemische Verbindung von Wasserstoff und Sauerstoff zu Wasser entsteht elektrischer Strom mit hohem Wirkungsgrad und, wenn als Brenngas reiner Wasserstoff eingesetzt wird, ohne Emission von Schadstoffen und Kohlendioxid (CO₂). Auch mit einem technischen Brenngas, beispielsweise Erdgas oder Kohlegas und mit Luft anstelle von reinem Sauerstoff, wobei die Luft zusätzlich mit Sauerstoff angereichert sein kann, erzeugt eine Brennstoffzelle deutlich weniger Schadstoffe und weniger Kohlendioxid als andere Energieerzeuger, die mit fossilen Energieträgern arbeiten.

Die technische Umsetzung des Prinzips der Brennstoffzelle hat zu unterschiedlichen Lösungen, und zwar mit verschiedenartigen Elektrolyten und mit Betriebstemperaturen zwischen 80°C und 1000°C, geführt. In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen voneinander unterscheiden.

Eine einzelne Brennstoffzelle liefert eine Betriebsspannung von maximal 1,1 Volt. Daher wird eine Vielzahl von Brennstoffzellen aufeinander gestapelt und zu einem Brennstoffzellenblock zusammengefaßt. In der Fachliteratur wird ein solcher Block auch "Stack" genannt. Durch das In-Reihe-Schalten der Brennstoffzellen des Brennstoffzellenblocks kann die Betriebsspannung einer Brennstoffzellenanlage einige 100 Volt betragen.

Bei einem Brennstoffzellenblock sind in abwechselnder Reihenfolge verschiedene Elemente aufeinandergestapelt. Solche Elemente sind beispielsweise Elektrolyt-Elektroden-Einheiten und bipolare Platten. Durch das Aufeinanderstapeln wird eine Stapelrichtung geschaffen, die im wesentlichen Senkrecht zur Ebene der planaren Elemente verläuft. Je nach Ausführungsform des Brennstoffzellenblocks befinden sich zwischen einer Elektrolyt-Elektroden-Einheit und einer bipolaren Platte weitere Elemente, wie beispielsweise Druckkissen, elektrisch leitende Schichten oder Dichtungen. In Abhängigkeit von der Art der Brennstoffzellen ist die bipolare Platte beispielsweise als eine Verbundleiterplatte oder als ein Kühlelement ausgestaltet, das aus zwei aufeinandergestapelten Platten mit einem dazwischenliegenden Kühlwasserraum besteht.

Zwischen den aufeinandergestapelten Elementen des Brennstoffzellenblocks sind Flüssigkeits- und Gasräume angeordnet. Sie werden von Axialkanälen mit Flüssigkeit bzw. Gas versorgt. Die Axialkanäle verlaufen hierbei im wesentlichen parallel zur Stapelrichtung des Brennstoffzellenblocks, also senkrecht zur Ebene der übereinandergestapelten plattenförmigen Elemente. Die Verbindung zwischen einem Axialkanal und den einzelnen Flüssigkeits- oder Gasräumen wird durch Radialkanäle hergestellt, die im wesentlichen in der Ebene der Elemente verlaufen. Brennstoffzellenblöcke, die diese Art von Aufbau zeigen, sind beispielsweise aus der EP 0 591 800 E1 und der WO 96/20510 bekannt.

Die Radialkanäle sind als Bohrungen oder Nuten in Elementen des Brennstoffzellenblocks, beispielsweise den bipolaren Platten, gebildet. Durch die Ausgestaltung der Radialkanäle ist die Anbindung eines Axialkanals an einen Gas- oder Flüssigkeitsraum, und somit die Funktion des Axialkanals festgelegt. Wird beispielsweise ein als Kühlwasserraum ausgestalteter Zwischenraum zwischen zwei Elementen mit einem Axialkanal verbunden, so ist dieser Axialkanal selbstverständlich nur zur Durchleitung von Kühlflüssigkeit zu verwenden.

Je nach Ausgestaltung des Brennstoffzellenblocks nach Art, Größe oder Leistung sind unterschiedlich starke Zuströme von Flüssigkeiten oder Betriebsgasen zu den Brennstoffzellen erforderlich. Um solchen Unterschieden gerecht zu werden ist es notwendig, bei unterschiedlichen Brennstoffzellenblöcken unterschiedliche Radialkanäle in die jeweiligen Elemente des Brennstoffzellenblocks einzuarbeiten. Dies macht die Herstellung einer Anzahl verschiedener Typen von Brennstoffzellenblöcken aufwendig.

Auch die Herstellung eines einzigen Typs eines Brennstoffzellenblocks gestaltet sich aufwendig, wenn innerhalb eines Brennstoffzellenblocks verschiedene Brennstoffzellen mit unterschiedlichen Flüssigkeits- oder Gasströmen versorgt werden müssen. In diesem Fall beherbergt der Brennstoffzellenblock gleichartige Elemente, beispielsweise Kühlelemente, die durch unterschiedlich ausgestaltete Radialkanäle unterschiedlich gefertigt sind.

Aufgabe der Erfindung ist es daher, einen Brennstoffzellenblock anzugeben, der trotz unterschiedlicher Anforderungen an verschiedenen Brennstoffzellen einfach und preiswert herzustellen ist.

Diese Aufgabe wird durch einen Brennstoffzellenblock der obengenannten Art gelöst, der erfindungsgemäß mindestens einen Radialkanal aufweist, der als ein Sackkanal ausgestaltet ist und der zu keinem Axialkanal eine Verbindung herstellt.

Als ein Radialkanal wird ein Kanal verstanden, der in der Ebene der planaren Elemente verläuft. Er kann jedoch auch nur im wesentlichen in der Ebene eines Elements oder auch zwischen zwei Elementen verlaufen und in einem Teil seines Verlaufes aus dieser Ebene ausbrechen, um beispielsweise durch ein Element hindurchzudringen, um in ein darüber- oder darunterliegendes Element zu gelangen, oder um zwischen zwei Elemente zu gelangen.

In einem ersten Schritt geht die Erfindung von der Überlegung aus, daß die oben beschriebenen Nachteile eines Brennstoffzellenblocks aus dem Stand der Technik behoben werden, wenn nicht die Radialkanäle an sich, sondern nur die Verbindung zwischen Radialkanal und Axialkanal nach den Anforderungen der verschiedenen Brennstoffzellen ausgestaltet werden. Hierdurch ist der Strom des Mediums nicht mehr von der Ausgestaltung der Radialkanäle und damit des Elements als Ganzes, sondern nur von der Ausgestaltung der Verbindung zwischen den Radialkanälen und dem Axialkanal abhängig.

In einem zweiten Schritt geht die Erfindung von der Überlegung aus, daß mehrere Radialkanäle vom Zwischenraum in Richtung des Axialkanals führen und alle Radialkanäle zwar mit dem Zwischenraum verbunden sind aber nicht alle Radialkanäle mit dem Axialkanal verbunden sind. Je nach Anzahl der Radialkanäle, die mit dem Axialkanal verbunden sind, ist der Fluß des Mediums zwischen Axialkanal und Zwischenraum unterschiedlich. Sind viele Radialkanäle mit dem Axialkanal verbunden und stellen somit eine Verbindung zwischen Axialkanal und Zwischenraum her, sc kann entsprechend viel flüssiges oder gasförmiges Medium vom Axialkanal zum Zwischenraum oder umgekehrt strömen. Sind nur wenige Radialkanäle mit dem Axialkanal verbunden, so ist die Strömung zwischen Axialkanal und Zwischenraum entsprechend gehemmt. Die Erfindung geht außerdem von der Überlegung aus, daß, wenn nur ein einziger Radialkanal vom Zwischenraum zum Axialkanal weist, die Verbindung zwischen dem Radialkanal und dem Axialkanal darüber entscheidet, ob ein Medium vom Axialkanal zum Zwischenraum oder umgekehrt strömen kann oder nicht.

In einem dritten Schritt geht die Erfindung von der Überlegung aus, daß eine Verbindung zwischen dem Radialkanal und dem Axialkanal dann variabel hergestellt wird, wenn mindestens ein Radialkanal als ein Sackkanal ausgestaltet ist und keine Verbindung zu einem Axialkanal hat. Das Ende des Sackkanals kann bei Bedarf geöffnet werden. Eine solche Öffung geschieht beispielsweise dadurch, daß das Ende eines Sackkanals aufgebohrt und somit die Verbindung zwischen dem Radialkanal und dem Axialkanal hergestellt wird. Auch das Ausschneiden eines im Element befindlichen Axialkanals in der Weise, daß das geschlossene Ende des Sackkanals abgeschnitten wird, bewirkt eine Öffnung des Radialkanals in den Axialkanal hinein. Auf diese Weise wird erreicht, daß durch die Öffnung einer festgelegten Anzahl von als Sackkanal ausgestalteten Radialkanälen die Strömungstärke des Mediums zwischen Axialkanal und Zwischenraum maßgeblich beeinflußbar ist.

Durch die Erfindung wird erreicht, daß für die Herstellung verschiedener Brennstoffzellenblöcke, deren Brennstoffzellen eine unterschiedliche Strömung des Mediums verlangen, nicht mehr gleichartige Elemente, beispielsweise die Kühlelemente, in verschiedenen Ausführungsformen hergestellt werden müssen. Beim Herstellungsprozeß der Elemente ist jedes gleichartige Element gleich ausgestaltet. Die vorher festgelegte Strömungsstärke zwischen dem Zwischenraum zwischen zwei Elementen und einem Axialkanal wird durch das nachträgliche Öffnen der entsprechenden Anzahl von zu einem Sackkanal ausgestalteten Radialkanälen bewirkt. In entsprechender Art und Weise ist auch ein Brennstoffzellenblock in der Art herstellbar, daß ein einziger Axialkanal an verschiedene Zwischenräume so angeschlossen ist, daß die Strömungsstärke vom Axialkanal nicht zu jedem Zwischenraum gleich ist. Je nach Lage des Zwischenraums im Brennstoffzellenblock ist der Zwischenraum durch die Öffnung mehr oder weniger Radialkanäle mit mehr oder weniger Medium versorgbar.

In vorteilhafter Ausgestaltung der Erfindung endet der Sackkanal in unmittelbarer Nähe zu einem Axialkanal. Auf diese Weise lassen sich in Abhängigkeit vom Querschnitt des Axialkanals mehr oder weniger Radialkanäle an den Axialkanal anschließen. Hat der Axialkanal beispielsweise einen kleinen Querschnitt, so enden mehr Radialkanäle in einem Sackkanal, ohne in den Axialkanal zu münden. Hat der Axialkanal einen großen Querschnitt, enden weniger oder gar kein Radialkanal in einem Sackkanal, ohne in den Axialkanal zu münden. Die Ausgestaltung der Verbindung zwischen dem Axialkanal und den Radialkanälen ist bei dieser Ausführungsform der Erfindung leicht durch Schneiden oder Stanzen des Axialkanals mit vorgegebenem Querschnitt zu bewerkstelligen.

Ein vorteilhafter Abstand zwischen dem Ende des Sackkanals und dem Axialkanal beträgt 1 mm bis 50 mm. Bei einem solchen Abstand läßt sich die Verbindung zwischen den Radialkanälen und dem Axialkanal durch Variation des Querschnitts des Axialkanals und somit auf einfache Weise herstellen.

In weiterer vorteilhafter Ausgestaltung der Erfindung ist der Axialkanal mit dem Zwischenraum durch mindestens einen Radialkanal verbunden. Ein auf diese Weise durch einen Radialkanal an den Axialkanal angeschlossener Zwischenraum ist nicht maximal, sondern nur teilweise an den Axialkanal angeschlossen. Die Möglichkeit, einen Zwischenraum nur teilweise an einen Axialkanal anzuschließen, eröffnet bisher unbekannte Möglichkeit für die Verwendung eines Axialkanals. So kann ein solcher Axialkanal beispielsweise als Entlüftungskanal für einen mit Flüssigkeit durchströmten Zwischenraum dienen und unerwünschte Luftblasen abtransportieren. Dadurch, daß der Axialkanal nur durch einen oder wenige Radialkanäle, also nur teilweise mit dem Zwischenraum verbunden ist, wird verhindert, daß größere Mengen der Flüssigkeit unerwünschterweise aus dem Zwischenraum in den Axialkanal übertreten können.

Ein Axialkanal, der mit dem Zwischenraum durch nur einen oder wenige Radialkanäle verbunden ist, kann auch dazu genutzt werden, daß bestimmte Regionen des Zwischenraums verstärkt durchströmt werden, die ohne diesen Axialkanal nicht so stark durchströmt würden. Sind verschiedene Radialkanäle mit verschiedenen Stellen des Zwischenraums verbunden, so kann durch einen solchen Axialkanal bewirkt werden, daß selektiv nur vorbestimmte Stellen des Zwischenraums durchströmt werden. Es wird somit eine gezielte räumliche Auswahl der durchströmten Stellen des Zwischenraums getroffen.

In weiterer Ausgestaltung der Erfindung ist der Axialkanal mit keinem Radialkanal verbunden, sondern gasdicht vom Zwischenraum getrennt. Ein solcher Axialkanal kann zum Transport eines Mediums verwendet werden, das den Zwischenraum nicht durchströmen soll.

In weiterer vorteilhafter Ausgestaltung der Erfindung ist der Axialkanal von allen zwischen zwei benachbarten Elementen gebildeten Zwischenräumen des Brennstoffzellenblocks gasdicht getrennt. Ein solcher Axialkanal kann beispielsweise als ein Transportkanal für ein weiteres Medium genutzt werden, das nicht direkt durch die Zwischenräume geführt wird. In Verbindung mit dem Betrieb eines Brennstoffzellenblocks sind eine Vielzahl von Medien im und um den Brennstoffzellenblock zu führen. Für jede dieser Medienführung ist ein Kanal oder eine Leitung notwendig. Ein Brennstoffzellenblock weist daher eine Vielzahl von Kanälen oder Leitungen auf. Da bei bestimmten Konstruktionsformen einer Brennstoffzelle innerhalb der die Brennstoffzelle bildenden Elemente aus Symmetriegründen mehr Axialkanäle eingebracht werden kennen als für die Führung von Betriebs- und Kühlmitteln notwendig sind, ist es sinnvoll, diese Axialkanäle zur Führung weiterer Medien zu verwenden. Hierdurch kann eine Leitung, die vorher außerhalb der Brennstoffzellen geführt wurde, eingespart werden. Dies spart Kosten und verringert das Volumen des Brennstoffzellenblocks.

In einer weiteren vorteilhaften Ausgestaltung der Erfindung sind die den Zwischenraum bildenden Elemente jeweils aus einem zentralen Unterelement und mindestens einem peripheren Unterelement gebildet, wobei die Axialkanäle durch das periphere Unterelement verlaufen. Das zentrale und das mindestens eine periphere Unterelement sind im fertigen Zustand des Brennstoffzellenblocks zu einem Element zusammengefügt. Diese Fügung kann beispielsweise durch eine Steckverbindung oder durch Klebung oder durch Schweißung hergestellt werden. Ein solcher Aufbau eines Elements hat den Vorteil, daß das zentrale Unterelement für eine Vielzahl verschiedener Brennstoffzellenblöcke in gleicher Ausführung hergestellt werden kann. Hierdurch wird die Massenproduktion der Elemente in erheblichem Umfang verbilligt. Lediglich die peripheren Elemente sind an die Anforderungen des jeweiligen Brennstoffzellenblocks, dessen Bestandteil sie werden sollen, anzupassen. Dies vereinfacht den Herstellungsprozeß von Elementen für einen Brennstoffzellenblock erheblich.

Ein weiterer Vorteil läßt sich dadurch erreichen, daß der jeweilige Querschnitt mindestens eines Axialkanals in verschiedenen gleichartigen Elementen unterschiedlich ist. Ein innerhalb der Elemente angeordnete Axialkanal durchquert viele gleichartige Elemente, beispielsweise viele bipolare Platten oder Kühlkarten. Je nach Lage der Elemente innerhalb des Brennstoffzellenblocks, können die Zwischenräume, die die Elemente bilden, mit einem unterschiedlich starken Medienstrom zu versorgen sein. Bei der oben beschriebenen geeigneten Konstruktion der Radialkanäle ist die Form und Größe des Querschnitts des Axialkanals verantwortlich für die Anzahl der Radialkanäle, die an den Axialkanal angeschlossen sind.

Auf diese Weise hat eine Variation des Querschnitts des Axialkanals in verschiedenen gleichartigen Elementen zur Folge, daß die Zwischenräume, die durch die Elemente gebildet werden, mit einem unterschiedlich starken Medienstrom versorgt werden.

Vorzugsweise sind die den Zwischenraum bildenden Elemente zwei miteinander verbundene metallische Platten. Die Radialkanäle sind beispielsweise als Nuten in mindestens einer der Platten, oder noch einfacher, durch die Form der Platten vorgegeben. Eine einfache Herstellungsart für die Form solcher Platten ist das Tiefziehen der Platten, durch die sich solche Platten sehr schnell und kostengünstig herstellen lassen. Allerdings sind bei einem solchen Verfahren die Tiefziehwerkzeuge sehr kostenspielig. Durch die Erfindung wird der Vorteil erzielt, daß für verschiedene Brennstoffzellenblöcke nur noch Elemente gleicher Form benötigt werden, was zur Folge hat, daß alle diese Elemente mit nur einem Tiefziehwerkzeugsatz hergestellt werden können. Dies senkt die Produktionskosten der Elemente erheblich.

In zweckmäßiger Ausgestaltung der Erfindung sind die Platten durch mindestens eine Schweißnaht miteinander verbunden.
Durch eine solche Verbindung ist ein gasdichter Zwischenraum zwischen zwei Platten besonders einfach und effektiv herstellbar. Es ist jedoch auch möglich, die Platten durch Kleben miteinander zu verbinden.

Ein weiterer Vorteil läßt sich dadurch erreichen, daß zwischen einem Axialkanal und dem Ende des Sackkanals ein Schweißnaht angeordnet ist. Ein solche Schweißnaht trennt den Sackkanal vom Axialkanal. Soll der Sackkanal zu einem Radialkanal geöffnet werden, der in den Axialkanal mündet, so kann die Schweißnaht leicht, beispielsweise durch Ausschneiden eines Teils der Schweißnaht, durchtrennt werden, ohne daß die Stabilität des gesamten Elements beeinträchtigt wird.

Mit Vorteil ist mindestens ein Axialkanal durch eine den Axialkanal umlaufende Schweißnaht gasdicht vom Zwischenraum getrennt. Bei dieser Ausgestaltung der Erfindung mündet kein Radialkanal in den Axialkanal. Hierdurch wird der Axialkanal für den Transport eines weiteren Mediums verwendbar, das nicht durch den Zwischenraum strömen soll.

In bevorzugter Ausführungsform der Erfindung bilden die den Zwischenraum bildenden Platten ein Kühlelement. Ein solches Kühlelement dient zur Abfuhr von überschüssiger Wärme aus der oder den dem Kühlement zugeordneten Brennstoffzellen. Je nach Lage einer Brennstoffzelle innerhalb des Brennstoffzellenblocks oder je nach Größe und Leistung des Brennstoffzellenblocks, erzeugen die Brennstoffzelle eine unterschiedliche Menge an Wärme, die abgeführt werden muß. Durch die Erfindung ist es möglich, den Strom des Kühlwassers durch das Kühlelement an die Leistung anzupassen, die die Brennstoffzelle in Betrieb zu erbringen vermag. Außerdem kann ein Axialkanal als ein Entlüftungskanal eingesetzt werden oder besonders schlecht durchströmte Bereiche des Zwischenraums durch einen teilweise angeschlossenen Axialkanal besser durchströmt werden.

Zweckmäßigerweise ist der Zwischenraum dafür ausgelegt, im Betrieb des Brennstoffzellenblocks Kühlwasser zu führen. Je nach Ausführungsform des Zwischenraums sind festgelegte Bereiche des Zwischenraums mit jeweils festgelegten Radialkanälen verbunden. Durch den selektiven Anschluß der Radialkanäle an den Axialkanal ist es möglich, selektiv gezielt ausgesuchte Regionen von Kühlwasser durchströmen zu lassen.

In einer weiteren Ausgestaltung der Erfindung ist der Zwischenraum dafür ausgelegt, im Betrieb des Brennstoffzellenblocks ein Betriebsgas zu führen. Je nach Auslastung einer Zelle, die von der Lage der Zelle innerhalb des Brennstoffzellenblocks abhängt oder je nach Art des Betriebsgases wird der Zwischenraum durch den Anschluß mehr oder weniger Radialkanäle an einen Axialkanal mit mehr oder weniger Betriebsgas beaufschlagt. Wird die Brennstoffzelle beispielsweise mit reinem Sauerstoff betrieben, so ist volumenmäßig weniger Betriebsgas einem Zwischenraum zuzuführen als wenn die Brennstoffzelle mit Luft betrieben wird.

Ausführungsbeispiele der Erfindung werden anhand von sieben Figuren erläutert. Dabei zeigen:
FIG 1 eine Draufsicht auf ein Element eines Brennstoffzellenblocks, das in Verbindung mit einem weiteren Element des Brennstoffzellenblocks sowohl einen Zwischenraum wie auch Radialkanäle ausbildet;
FIG 2 einen Schnitt durch das Element gemäß der Linie II-II in FIG 1;
FIG 3 einen Schnitt durch das Element gemäß der Linie III-III in FIG 1;
FIG 4 einen Schnitt durch das Element gemäß der Linie IV-IV in FIG 1;
FIG 5 einen Ausschnitt aus einem Schnitt durch einen Brennstoffzellenblock;
FIG 6 eine Explosionszeichnung eines Brennstoffzellenblocks, wobei nur gleichartige Elemente in teilweiser Form dargestellt sind;
FIG 7 eine Explosionszeichnung einer Brennstoffzelle.

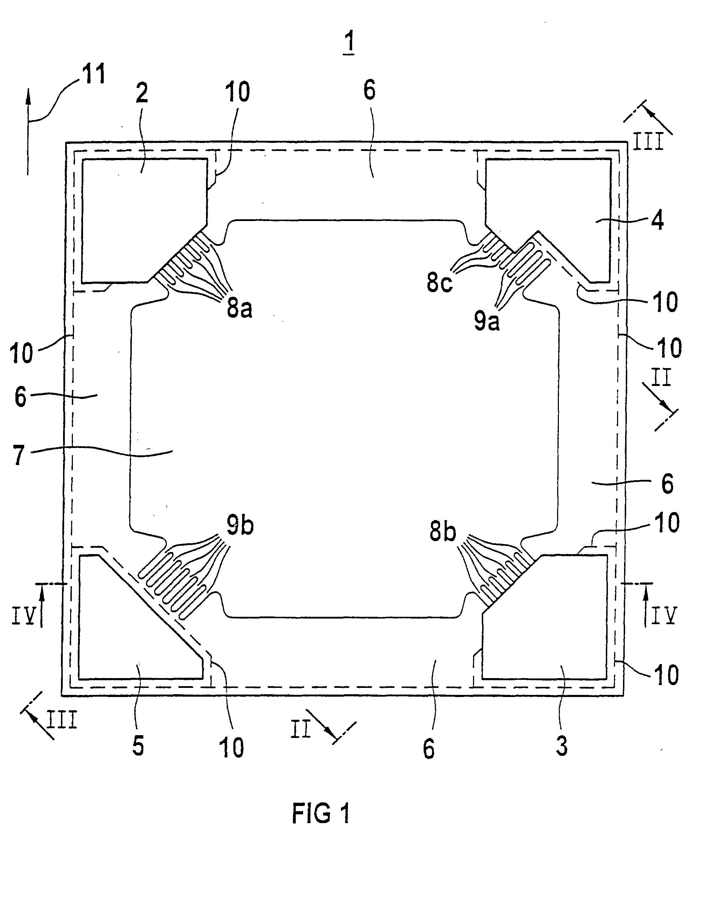

In Figur 1 wird ein Element 1 dargestellt, das als eine metallische Platte eines Kühlelements ausgestaltet ist. Das Kühlelement wird gebildet durch das Element 1 und eine zum Element 1 symmetrische weitere Platte, die auf dem Element 1 aufliegt und in Figur 1 nicht dargestellt ist. Das Element 1 ist durch Tiefziehen hergestellt und weist folgende Formmerkmale auf:
a) Vier aus der Platte ausgeschnittene Bereiche, die in Verbindung mit weiteren zum Element 1 gleichartigen Elementen und den Dichtungen zwischen den Elementen vier Axialkanäle 2, 3, 4 und 5 bilden;
b) einen Randbereich 6;
c) einen Bereich der gegenüber dem Randbereich 6 als eine Vertiefung 7 ausgestaltet ist, wobei die Vertiefung zusammen mit dem weiteren zum Element 1 symmetrischen Element einen Zwischenraum 7 bildet;
d) eine Anzahl von Radialkanälen 8a, 8b, 8c, welche den Zwischenraum 7 mit den Axialkanälen 2, 3 und 4 verbinden;
e) eine Anzahl von Radialkanälen, die als Sackkanäle 9a, 9b ausgestaltet sind;
f) mehrere als eine Linie ausgestaltete Bereiche, sie sind in Figur 1 als gestrichelte Linie dargestellt, die zum Anbringen einer Schweißnaht 10 vorbereitet sind, die das Element 1 mit dem zum Element 1 symmetrischen Element im fertiggestellten Brennstoffzellenblock verbindet.

Im zusammengebauten Zustand ist das Kühlelement, dessen Bestandteil das Element 1 ist, in einem Brennstoffzellenblock in der Weise angeordnet, daß Kühlflüssigkeit durch den Axialkanal 2 strömt. Der Axialkanal 2 ist mit sechs Radialkanälen 8a in der Weise verbunden, daß die Kühlflüssigkeit aus dem Axialkanal 2 durch die Radialkanäle 8a in den Zwischenraum 7 strömt. Die Kühlflüssigkeit durchströmt den Zwischenraum 7 und verläßt den Zwischenraum 7 durch die sechs Radialkanäle 8b, die den Axialkanal 3 mit dem Zwischenraum 7 verbinden. Der Axialkanal 3 leitet die Kühlflüssigkeit zu einem nichtdargestellten Wärmetauscher, in dem die Kühlflüssigkeit abgekühlt und wieder in Richtung des Axialkanals 2 gepumpt wird, um das Kühlelement erneut zu durchströmen.

Das Element 1 ist dazu ausgelegt, in einem Brennstoffzellenblock in der Weise gestapelt zu werden, daß die Richtung 11 nach oben weist. Die Stapelrichtung des Brennstoffzellenblocks liegt somit im wesentlichen parallel zur Erdoberfläche. Durch diese Stapelrichtung bedingt sammeln sich in den Zwischenraum 7 gelangte Luftblasen im oberen Bereich des Zwischenraums 7. In diesem oberen Bereich sind drei Radialkanäle 8c angeordnet, die den Zwischenraum 7 mit dem Axialkanal 4 verbinden. Durch diese drei Radialkanäle 8c können die Luftblasen aus dem Zwischenraum in den Axialkanal 4 entweichen, und durch diesen zu einer Entlüftungsstelle geführt werden. Damit der Axialkanal 4 nicht zu viel Kühlwasser aufnimmt, ist er mit dem Zwischenraum 7 nur durch drei Radialkanäle 8c verbunden. Drei weitere Radialkanäle 9a, die vom Zwischenraum 7 in Richtung des Axialkanals 4 weisen, münden nicht in den Axialkanal 4, sondern sind als Sackkanal ausgestaltet. Durch diese Radialkanäle 9a kann keine Kühlflüssigkeit strömen. Dies wird durch eine Schweißnaht 10 gewährleistet, die zwischen den drei Sackkanälen 9a und dem Axialkanal 4 angeordnet ist und dafür sorgt, daß sich keine Kühlflüssigkeit aus dem Ende der Sackkanäle 9a durch die beiden Elemente in den Axialkanal 4 preßt. In dem in Figur 1 dargestellten Element 1 ist der Axialkanal 4 durch drei Radialkanäle 8c mit dem Zwischenraum verbunden. Wird ein zum Element 1 ähnliches Element in der Weise eingesetzt, daz nur wenig Luft in den Zwischenraum 7 gelangen kann, so ist es ausreichend, den Querschnitt des Axialkanals 4 in der Art auszugestalten, daß nur ein oder zwei Radialkanäle 8c den Zwischenraum 7 mit dem Axialkanal 4 verbinden. Die Anzahl der Radialkanäle 8c, die den Zwischenraum 7 mit dem Axialkanal 4 verbinden, wird somit bestimmt durch den Querschnitt, den der Radialkanal 4 im Bereich des Elements 1 aufweist. Ebenso gut ist es vorstellbar, daß zur besseren Durchströmung des Zwischenraums 7 mehr als drei Radialkanäle 8c in der Weise geöffnet werden, daß sie den Zwischenraum 7 mit dem Axialkanal 4 verbinden. Bei der Herstellung des Elements 1 ist diese Variation der Anzahl der zum Axialkanal 4 offenen Radialkanäle 8c in einfacher Weise durch die entsprechende Ausgestaltung des Querschnitts des Axialkanals 4 herstellbar. Der Querschnitt des Axialkanals 4 im Bereich des Elements 1 wird durch einfaches Ausschneiden oder Ausstanzen eines Stück Metalls in der gewünschten Form des Querschnitts aus dem Element 1 bewerkstelligt.

Die Herstellung von dem Element 1 ähnlichen Elementen einer größeren Anzahl von Brennstoffzellenblöcken erfolgt also beispielsweise in der Weise, daß in die Elemente durch Tiefziehen die Form des Zwischenraums 7 und der Radialkanäle 8a, 8b, 8c und 9a, 9b eingebracht wird. Eventuell wird das Element noch beschichtet. In einem weiteren Herstellungsschritt werden jeweils zwei Elemente 1 entlang der vorgesehenen Linien 10 miteinander zu einem Kühlelement verschweißt, so daß der Zwischenraum und die Radialkanäle zwischen den Elementen entstehen. Alternativ können die Elemente auch durch Kleben oder Löten miteinander verbunden werden. Abschließend wird eine Dichtung durch Vulkanisieren auf die verbundenen Elemente aufgebracht.

Bis zu diesem Herstellungsschritt sind alle Elemente gleich. Erst in einem weiteren Herstellungsschritt werden die Öffnungen für die Axialkanäle 2, 3, 4 und 5 in das Element 1, beispielsweise durch Stanzen oder Schneiden eingebracht. Dies geschieht in der Weise, daß eine festgelegte Anzahl von als Sackkanäle vorbereitete Radialkanäle 8a, 8b, 8c in der Weise angeschnitten werden, daß sie im fertigen Zustand des Kühlelements die Axialkanäle 2, 3 und 4 in der gewünschten Weise mit dem Zwischenraum 7 verbinden.

Der Axialkanal 5, der durch das Element 1 führt, ist mit dem Zwischenraum 7 durch keinen einzigen Radialkanal verbunden. Es weisen lediglich sechs Sackkanäle 9b vom Zwischenraum 7 in Richtung des Axialkanals 5. Die Sackkanäle 9b enden in unmittelbarer Nähe zum Axialkanal 5. Der Abstand zwischen dem Ende der Sackkanäle 9b und dem Axialkanal 4 beträgt beispeilsweise 8 mm. Der Axialkanal 5 ist gasdicht vom Zwischenraum getrennt. Dies wird durch eine Schweißnaht 10 bewirkt, die im fertigen Zustand des Kühlelements den Axialkanal 5 umläuft.

Die Schweißnaht 10 ist vom Querschnitt des Axialkanals 5 an keiner Stelle durchtrennt. Der Axialkanal 5 steht somit zur Durchleitung eines vom Kühlwasser unabhängigen gasförmigen oder flüssigen Mediums zur Verfügung. Ohne den Axialkanal 5 müßte dieses Medium durch eine außerhalb des Brennstoffzellenblocks angeordnete Verrohrung transportiert werden. Durch die Ausgestaltung des vom Zwischenraum 7 getrennten Axialkanal 5 entfällt diese externe Verrohrung und es wird somit Platz gespart, was dazu beiträgt, daß der Brennstoffzellenblock kleiner ausgeführt werden kann.

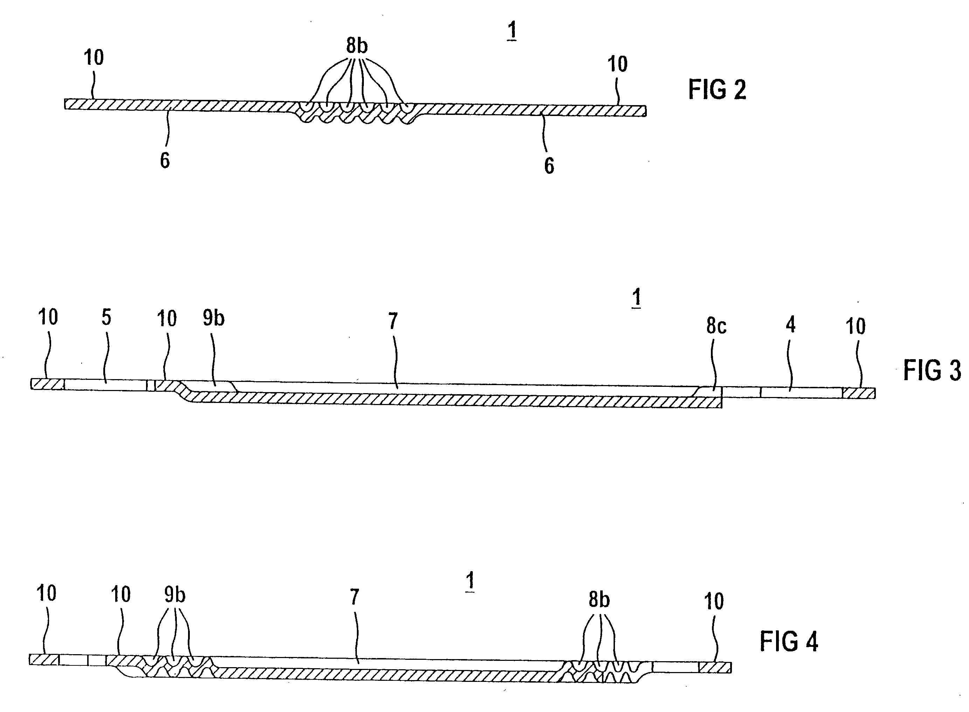

In Figur 2 ist ein Schnitt durch das Element 1 entlang der in Figur 1 dargestellten Linie II-II dargestellt. Die Schnittlinie verläuft durch die Randbereiche 6 und durch sechs Radialkanäle 8b, die eine Verbindung zwischen dem Axialkanal 3 und dem Zwischenraum 7 herstellen.

Figur 3 zeigt einen Schnitt durch das Element 1 entlang der in Figur mit III-III gekennzeichneten Linie. Der Schnitt verläuft durch den Axialkanal 5, der durch die ihn umlaufende Schweißnaht 10 gasdicht vom Zwischenraum 7 getrennt ist. Der weitere Verlauf des Schnitts geht durch einen der Sackkanäle 9b, den Zwischenraum 7 sowie einen der Radialkanäle 8c, die eine Verbindung zwischen dem Zwischenraum 7 und dem Axialkanal 4 herstellen.

Figur 4 zeigt einen Schnitt entlang der in Figur 1 dargestellten Linie IV-IV. Dieser Schnitt verläuft durch den Axialkanal 5, drei Sackkanäle 9b, den Zwischenraum 7, drei Radialkanäle 8b und den Axialkanal 3, der durch die Radialkanäle 8b mit dem Zwischenraum 7 verbunden ist.

Aus den Figuren 2, 3 und 4 ist ersichtlich, daß der Zwischenraum 7 sowie die Radialkanäle 8 und Sachkanäle 9 als eine Vertiefung im Element 1 ausgestaltet sind. Die Randbereiche 6, und alle Bereiche, auf denen die Schweißnaht 10 vorbereitet ist, liegen außerhalb der Vertiefungen. Diese Bereiche liegen eng an dem weiteren Element an, das mit dem Element 1 im betriebsbereiten Zustand des Brennstoffzellenblocks den Zwischenraum 7 sowie die Radialkanäle 8a, 8b, 8c und Sackkanäle 9a, 9b bildet.

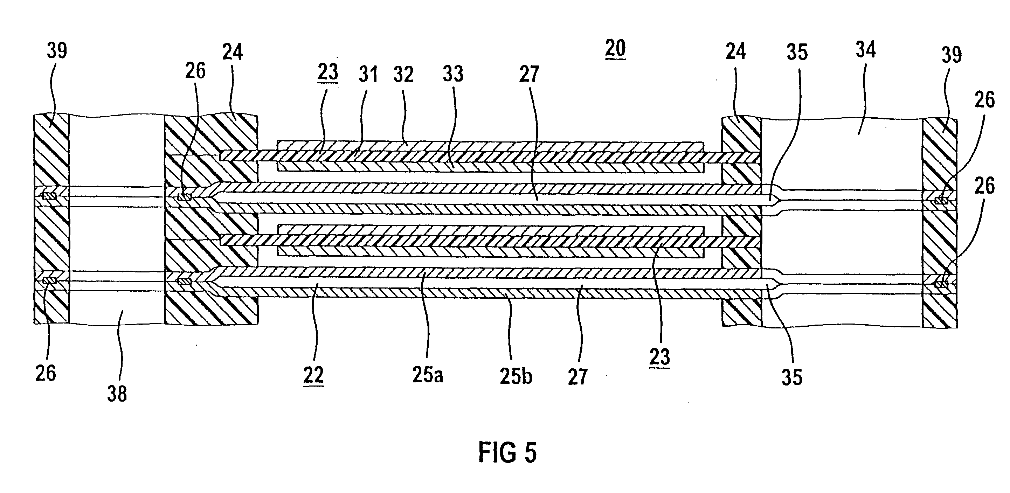

Figur 5 zeigt einen Anschnitt aus einem Schnitt durch einen Brennstoffzellenblock 20. In diesem Brennstoffzellenblock 20 sind eine Anzahl von Kühlelementen 22 abwechselnd mit einer Anzahl von Elektrolyt-Elektroden-Elementen 23 aufeinandergestapelt. Die Kühlelemente 22 und die Elektrolyt-Elektroden-Elemente 23 sind durch Dichtungen 24 voneinander beabstandet. Ein Kühlelement 22 ist aus zwei zueinander im wesentlichen symmetrischen Elementen 25a und 25b zusammengesetzt. Die beiden Elemente 25a und 25b sind durch Schweißnähte 26 miteinander verbunden und bilden zwischen sich einen Zwischenraum 27. Ein Elektrolyt-Elektroden-Element 23 umfaßt einen Elektrolyten 31, an dessen ebenen Seiten eine Anode 32 und eine Kathode 33 angeordnet sind. Der Brennstoffzellenblock 20 umfaßt außerdem einen Axialkanal 34, der dafür ausgelegt ist, im Betrieb des Brennstoffzellenblocks 20 mit Kühlflüssigkeit durchströmt zu werden.

Der Axialkanal 34 ist mit den Zwischenräumen 27 zwischen den Elementen 25a und 25b der Kühlelemente 22 jeweils durch Radialkanäle 35 verbunden. Während des Betriebs des Brennstoffzellenblocks 20 strömt Kühlflüssigkeit aus dem Axialkanal 34 durch die Radialkanäle 35 in die Zwischenräume 27 der Kühlelemente 22. Die Kühlflüssigkeit strömt durch die Zwischenräume 27 hindurch in einen weiteren Axialkanal des Brennstoffzellenblocks 20, der in Figur 5 nicht dargestellt ist.

Der Brennstoffzellenblock 20 umfaßt einen weiteren Axialkanal 38, der zu den Zwischenräumen 27 der Kühlelemente 22 keine Verbindung aufweist. Er ist dafür ausgelegt, während des Betriebs vom Brennstoffzellenblock 20 mit einem Betriebsgas durchströmt zu werden. Der Axialkanal 34 wie auch der Axialkanal 38 werden durch die im Außenbereich der Elemente 25a und 25b eingebrachten Öffnungen, die Dichtung 24 sowie eine weitere Dichtung 39 gebildet, die im Außenbereich der Elemente 25a und 25b des Brennstoffzellenblocks 20 angeordnet ist.

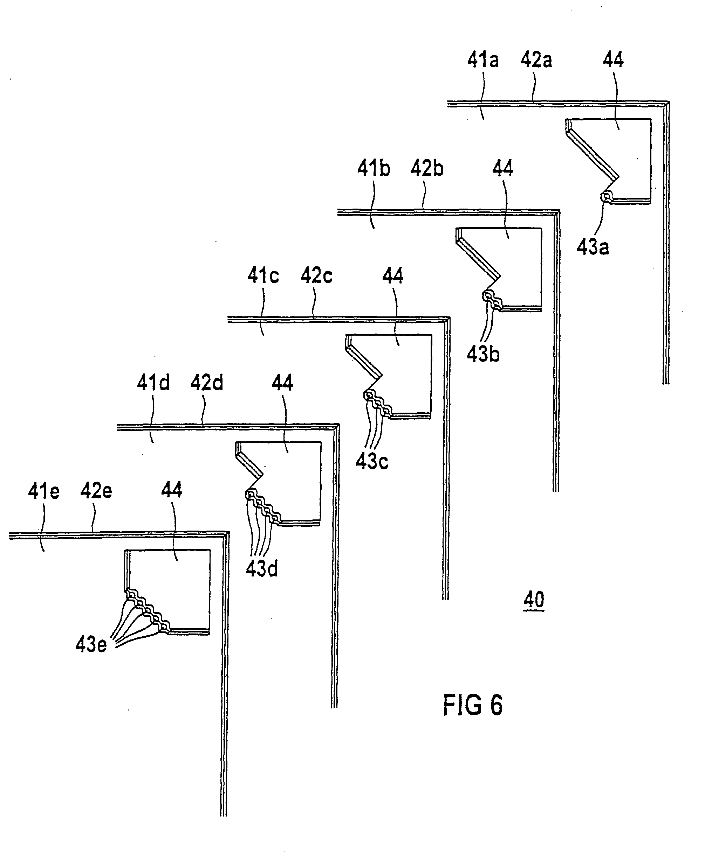

Figur 6 zeigt in der Art einer Explosionszeichnung ausschnittsweise fünf Kühlelemente 41a bis 41e eines Brennstoffzellenblocks 40. Die Kühlelemente 41a-e umfassen jeweils zwei Elemente 42a-e, die zwischen sich einen in Figur 6 nicht dargestellten Zwischenraum bilden. Außerdem bilden die Elemente 42a-e zwischen sich jeweils eine Anzahl von Radialkanälen 43a-e sowie nicht weiter dargestellte Sackkanäle. Die Radialkanäle 43a-e verbinden einen Axialkanal 44 mit dem Zwischenraum, der jeweils zwischen zwei benachbarten Elementen 42a-e gebildet ist. Im zusammengesetzten Zustand des Brennstoffzellenblocks 40 wird der Axialkanal 44 durch die Öffnungen in den Elementen 42a-e sowie Dichtungen gebildet, die jeweils zwischen zwei benachbarten Kühlelementen 41a-e im Außenbereich der Kühlelememte 41a-e angeordnet ist. Der Querschnitt des Axialkanals 44 ist in den verschiedenen Kühlelementen 41a-e unterschiedlich. Im Kühlelement 41a ist der Querschnitt des Axialkanals 44 so ausgestaltet, daß nur ein Radialkanal 43a den Zwischenraum dieses Kühlelements 41a mit dem Axialkanal 44 verbindet. Weitere (nicht dargestellte) vom Zwischenraum zum Axialkanal 44 weisende Radialkanäle sind als Sackkanäle ausgestaltet, die in unmittelbarer Nähe zum Axialkanal 44 enden. In den Kühlelementen 41b bis 41e ist der Axialkanal 44 durch zwei, drei, vier bzw. fünf Radialkanäle 43b-e an den Zwischenraum des betreffenden Kühlelements angeschlossen. Auf diese Weise wird der Zwischenraum eines jeden der dargestellten Kühlelemente 41a-e mit einem unterschiedlichen Zustrom von Kühlmittel durch den Axialkanal 44 beliefert.

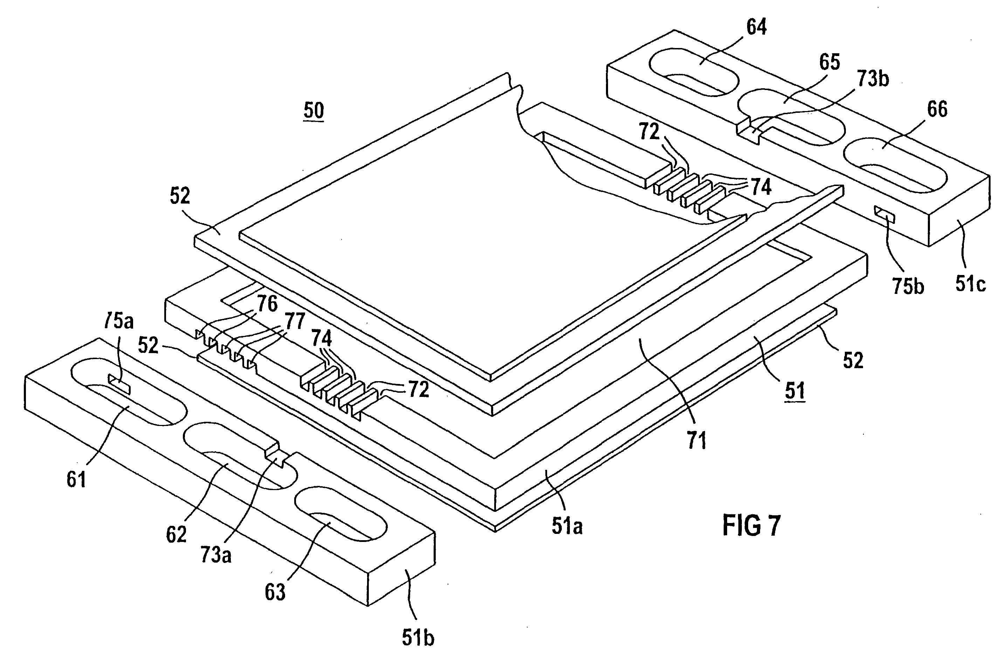

In Figur 7 ist eine Brennstoffzelle 50 dargestellt, die ein Element 51 sowie beidseitig daran angeordnete Elemente 52, die als Elektrolyt-Elektrodeneinheit ausgestaltet sind. Das Element 51 ist zusammengesetzt aus einem zentralen Unterelement 51a, sowie zwei daran angrenzenden peripheren Unterelementen 51b und 51c. Das zentrale Unterelement 51a ist als eine bipolare Platte ausgestalten. In den peripheren Unterelementen 51b und 51c verlaufen jeweils drei Axialkanäle. Im zusammengebauten Zustand der Brennstoffzelle 50 liegen die Elemente 52 eng an dem zentralen Unterelement 51a an und bilden mit diesem zusammen jeweils einen Zwischenraum 71. Einer der beiden Zwischenräume 71 ist in Figur 7 sichtbar auf der Oberseite des zentralen Unterelements 51a angeordnet, wohingegen der zweite Zwischenraum in Figur 7 nicht sichtbar auf der Unterseite des zentralen Unterelements 51a angeordnet ist. Der Zwischenraum 71 ist mit den Axialkanälen 62 und 65 durch eine Anzahl von Radialkanälen 72 verbunden, die in die Nuten 73a und 73b der peripheren Unterelement 51b und 51c münden.
Die Radialkanäle 72, 74, 73a und 73b können alternativ auch in das zentrale Unterelement 51a bzw. in die peripheren Unterlemente 51b und 51c als Bohrungen eingearbeitet sein. Solche Radialkanäle sind nach oben nicht offen wie die Nuten und lassen sich daher leichter abdichten.

Neben den Radialkanälen 72 befinden sich jeweils drei weitere Radialkanäle, die als Sackkanäle 74 ausgestaltet sind. Die Ausgestaltung als ein Sackkanal 74 ergibt sich dann, wenn die peripheren Unterelemente 51b und 51c eng am zentralen Unterelement 51a anliegen, da die Sackkanäle 74 in keine Nut der peripheren Unterelemente 51b, 51c einmünden, sondern direkt an der Wand der peripheren Unterelemente 51b, 51c enden. Durch eine in Figur 7 nicht dargestellte Dichtung, die jeweils zwischen aufeinandergestapelten, gleichartigen Brennstoffzellen 50 angeordnet sind, werden die Sackkanäle 74 verschlossen. Das obere der Elemente 52 deckt auch im zusammengebauten Zustand der Brennstoffzelle 50 die Sackkanäle 74 nicht vollständig, sondern nur teilweise ab.

Der Zwischenraum 71 ist dafür ausgelegt, im Betrieb des Brennstoffzellenblocks 50 ein Betriebsgas, beispielsweise Luft, zu führen. Die Luft strömt durch den Axialkanal 62 durch den Brennstoffzellenblock, der eine Anzahl von aufeinandergestapelten Brennstoffzellen 50 umfaßt. Die Luft strömt aus dem Axialkanal 62 durch die Nut 73a und weiter durch die Radialkanäle 72 in den Zwischenraum 71. Im weiteren Verlauf strömt sie in den Axialkanal 65, den sie durch die Radialkanäle 72 und die Nut 73b im peripheren Unterelement 51c erreicht. Durch den Axialkanal 65 wird die Luft von der Brennstoffzelle 50 wieder weggeführt. Im Zwischenraum 71 strömt die Luft entlang einer Elektrode des als Elektrolyt-Elektroden-Elements ausgeführten Elements 52, an dessen zentral angeordnetem Elektrolyten die elektrochemische Reaktion stattfindet, aus der heraus die Brennstoffzelle 50 Strom erzeugt.

Ein weiteres Betriebsgas, beispielsweise ein wasserstoffhaltiges Gas, wird im Betrieb des Brennstoffzellenblocks durch den Axialkanal 61. Durch einen Kanal 75a im peripheren Unterelement 51b gelangt das Betriebsgas in die Radialkanäle 76, die mit dem an der Unterseite des zentralen Unterelements 51a angeordneten Zwischenraums verbunden sind. Durch diesen Zwischenraum strömt das Betriebsgas hindurch und verläßt den Zwischenraum wieder, indem es durch in Figur 7 nicht weiter dargestellte Radialkanäle in die Nut 75b gelangen kann, die das Betriebsgas in den Axialkanal 66 leitet. Neben den Radialkanälen 76 sind drei weitere Radialkanäle ausgestaltet, die analog wie die Sackkanäle 74 als Sackkanäle 77 ausgestaltet sind. Wie die Sackkanäle 74 enden die Sackkanäle 77 im zusammengebauten Zustand der Brennstoffzelle 50 an der Wand des peripheren Unterelements 51b und werden durch eine Dichtung, die zwischen der Brennstoffzelle 50 und einer ihr benachbarten Brennstoffzelle angeordnet ist, verschlossen. Bei der Herstellung von mehreren Brennstoffzellenblöcken, die aus Brennstoffzellen zusammengesetzt sind, die der Brennstoffzelle 50 entspricht, können die zentralen Unterelemente einer jeden Brennstoffzelle vollkommen identisch hergestellt werden. Die Massenproduktion von identischen zentralen Unterelementen ist wesentlich preisgünstiger als die Produktion von vielen zentralen Unterelementen, die jeweils verschieden ausgestaltet sind. Bei unterschiedlichen Anforderungen der Brennstoffzellen an den Betriebsgas Zu- und Abstrom werden lediglich die Nuten 73b, 73c in den peripheren Unterelementen 51b und c unterschiedlich breit ausgeführt. Je nach Breite der Nuten 73b, 73c werden unterschiedlich viele Radialkanäle 72 geöffnet. Diese Variation ist sehr preisgünstig durchzuführen.

## Patentansprüche

1. Brennstoffzellenblock (40), der in einem Stapel angeordnete Elemente (1,25a-b,42a-e,51,52) und eine Anzahl in Stapelrichtung durch die Elemente (1,25a-b,42a-e,51,52) verlaufende Axialkanäle (2,3,4,5,34,38,44,61,62,63,64,65,66) umfaßt, wobei mindestens zwei benachbarte Elemente (1,25a-b,42ae,51,52) zwischen sich einen Zwischenraum (7,27,71) bilden und zwischen den beiden Elementen (1,25a-,42a-e,51,52) oder in einem der beiden Elemente (1,25a-b,42a-e,51,52) eine Anzahl mit dem Zwischenraum (7,27,71) verbundene Radialkanäle (8a,8b,8c,35,43a-e,72,76) ausgestaltet sind, wovon eine Anzahl den Zwischenraum (7,27,71) mit mindestens einem Pxialkanal (2,3,4,34,44,61,62,65,66) verbindet, sodaß ein gasförmiges oder flüssiges Medium vom Axialkanal (2,3,4,34,44,61,62, 65,66) zum Zwischenraum oder umgekehrt strömen kann, **gekennzeichnet durch** mindestens einen Radialkanal, der als ein Sackkanal (9a,9b,74,77) ausgestaltet ist und der zu keinem Axialkanal (2,3,4,5,34,38,44,61,62,63, 64,65,66) eine Verbindung herstellt.

2. Brennstoffzellenblock (40) nach Anscruch 1, **dadurch gekennzeichnet, daß** der Sackkanal (9a,9b,74,77) in unmittelbarer Nähe zu einem Axialkanal (4,5,34,38,44,61,62,65,66) endet.

3. Brennstoffzellenblock (40) nach Anspruch 1 oder 2, **dadurch gekennzeichnet, daß** der Abstand zwischen dem Ende des Sackkanals (9a,9b,74,77) und dem Axialkanal (4,5,34,38,44,61,62,65,66) 1 mm bis 50 mm beträgt.

4. Brennstoffzellenblock (40) nach Anspruch 2 oder 3, **dadurch gekennzeichnet, daß** der Axialkanal (4,34,44,61,62,65,66) mit dem Zwischenraum (7,27,71) durch mindestens einen Radialkanal (8a,8b,8c,35,43a-e, 72, 76) verbunden ist.

5. Brennstoffzellenblock nach Anspruch 2 oder 3, **dadurch gekennzeichnet, daß** der Axialkanal (5,38) mit keinem Radialkanal (8a,8b,8c,35,43a-e,72,76) verbunden ist, sondern gasdicht vom Zwischenraum (7,27) getrennt ist.

6. Brennstoffzellenblock nach Anspruch 5, **dadurch gekennzeichnet, daß** der Axialkanal (5,38) von allen zwischen zwei benachbarten Elementen (1,25a-b,42ae,51,52) gebildeten Zwischenräumen (7,27) des Brennstoffzellenblocks gasdicht getrennt ist.

7. Brennstoffzellenblock nach einem der Ansprüche 1 bis 6, **dadurch gekennzeichnet, daß** die den Zwischenraum (71) bildenden Elemente (51,52) jeweils aus einem zentralen Unterelement (51a) und mindestens einem peripheren Unterelement (51b,51c) gebildet sind, wobei die Axialkanäle (61,62,63,64,65,66) durch das periphere Unterelement 51b,51c) verlaufen.

8. Brennstoffzellenblock (40) nach einem der Ansprüche 1 bis 7, **dadurch gekennzeichnet, daß** der jeweilige Querschnitt mindestens eines Axialkanals (44) in verschiedenen gleichartigen Elementen (42a-e) unterschiedlich ist.

9. Brennstoffzellenblock (40) nach einem der Ansprüche 1 bis 8, **dadurch gekennzeichnet, daß** die den Zwischenraum (7,27) bildenden Elemente (1, 25a-b, 42a-e) zwei miteinander verbundene metallische Platten sind.

10. Brennstoffzellenblock nach Anspruch 9, **dadurch gekennzeichnet, daß** die Platten durch mindestens eine Schweißnaht (10,26) miteinander verbunden sind.

11. Brennstoffzellenblock nach Anspruch 10, **dadurch gekennzeichnet, daß** zwischen einem Axialkanal (4,5,34,38) und dem Ende des Sackkanals (9a,9b) eine Schweißnaht (10,26) angeordnet ist.

12. Brennstoffzellenblock nach Anspruch 11, **dadurch gekennzeichnet, daß** mindestens ein Axialkanal (5,38) durch eine den Axialkanal (5,38) umlaufende Schweißnaht (10,26) gasdicht vom Zwischenraum (7,27) getrennt ist.

13. Brennstoffzellenblock (40) nach einem der Ansprüch 9 bis 12 **dadurch gekennzeichnet, daß** die den Zwischenraum (7,27) bildenden Platten ein Kühlelement (22,41a-e) bilden.

14. Brennstoffzellenblock (40) nach einem der Anspruch 1 bis 13, **dadurch gekennzeichnet, daß** der Zwischenraum (7,27) dafür ausgelegt ist, im Betrieb des Brennstoffzellenblocks (40) Kühlwasser zu führen.

15. Brennstoffzellenblock nach einem der Anspruch 1 bis 13, **dadurch gekennzeichnet, daß** der Zwischenraum (71) dafür ausgelegt ist, im Betrieb des Brennstoffzellenblocks ein Betriebsgas zu führen.

## Claims

1. Fuel cell block (40), which comprises elements (1,25a-b,42a-e,51,52) arranged in a stack and a number of axial passages (2,3,4,5,34,38,44,61,62,63,64,65,66) running through the elements (1,25a-b,42a-e,51,52) in the stack direction, at least two adjacent elements (1,25a-b,42a-e, 51,52) forming a space (7,27,71) between them, and a number of radial passages (8a,8b,8c,35,43a-e,72,76), which are connected to the space (7,27,71), being configured between the two elements (1,25a,42a-e,51,52) or in one of the two elements (1,25a-b,42a-e,51,52), a number of which radial passages connect the space (7,27,71) to at least one axial passage (2,3,4,34,44,61,62,65,66), so that a gaseous or liquid medium can flow from the axial passage (2,3,4,34, 44,61,62,65,66) to the space or vice versa, **characterized by** at least one radial passage which is configured as a blind passage (9a,9b,74,77) and does not produce a connection to an axial passage (2,3,4,5,34,38,44,61,62,63,64,65,66).

2. Fuel cell block (40) according to Claim 1, **characterized in that** the blind passage (9a,9b,74,77) ends in the immediate vicinity of an axial passage (4,5,34,38, 44,61,62,65,66).

3. Fuel cell block (40) according to Claim 1 or 2, **characterized in that** the distance between the end of the blind passage (9a,9b,74,77) and the axial passage (4,5,34,38, 44,61,62,65,66) is 1 mm to 50 mm.

4. Fuel cell block (40) according to Claim 2 or 3, **characterized in that** the axial passage (4,34,44,61,62, 65,66) is connected to the space (7,27,71) by at least one radial passage (8a,8b,8c,35,43a-e,72,76).

5. Fuel cell block according to Claim 2 or 3, **characterized in that** the axial passage (5,38) is not connected to any radial passage (8a,8b,8c,35,43a-e,72,76), but rather is separated in a gastight manner from the space (7,27).

6. Fuel cell block according to Claim 5, **characterized in that** the axial passage (5,38) is separated in a gastight manner from all the spaces (7,27), formed between two adjacent elements (1,25a-b,42a-e,51,52), of the fuel cell block.

7. Fuel cell block according to one of Claims 1 to 6, **characterized in that** the elements (51,52) which form the space (71) are in each case formed from a central subelement (51a) and at least one peripheral subelement (51b,51c), with the axial passages (61,62,63,64,65,66) running through the peripheral subelement (51b,51c).

8. Fuel cell block (40) according to one of Claims 1 to 7, **characterized in that** the respective cross section of at least one axial passage (44) differs in different elements (42a-e) of the same type.

9. Fuel cell block (40) according to one of Claims 1 to 8, **characterized in that** the elements (1,25a-b,42a-e) which form the space (7,27) are two metallic plates connected to one another.

10. Fuel cell block according to Claim 9, **characterized in that** the plates are connected to one another by at least one weld seam (10,26).

11. Fuel cell block according to Claim 10, **characterized in that** a weld seam (10,26) is arranged between an axial passage (4,5,34,38) and the end of the blind passage (9a,9b).

12. Fuel cell block according to Claim 11, **characterized in that** at least one axial passage (5,38) is separated in a gastight manner from the space (7,27) by a weld seam (10,26) which runs around the axial passage (5,38).

13. Fuel cell block (40) according to one of Claims 9 to 12, **characterized in that** the plates which form the space (7,27) form a cooling element (22,41a-e).

14. Fuel cell block (40) according to one of Claims 1 to 13, **characterized in that** the space (7,27) is designed to carry cooling water when the fuel cell block (40) is operating.

15. Fuel cell block according to one of Claims 1 to 13, **characterized in that** the space (71) is designed to carry an operating gas when the fuel cell block is operating.

## Revendications

1. Bloc (40) de piles à combustible, qui comprend des éléments (1, 25a-b, 42a-e, 51, 52) disposés en un empilement et un certain nombre de canaux (2, 3, 4, 5, 34, 38,44, 61, 62, 64, 65, 66) axiaux s'étendant à travers les éléments (1, 25a-b, 42a-e, 51,52) dans la direction de l'empilement, au moins deux éléments (1, 25a-b, 42a-e, 51, 52) voisins formant entre eux un espace (7, 27, 71) intermédiaire et un certain nombre de canaux (8a, 8b, 8c, 35, 43a-e, 72, 76) radiaux communiquant avec l'espace (7, 27, 71) intermédiaire, étant formés entre les deux éléments (1, 25a-b, 42a-e, 51, 52) ou dans l'un des deux éléments (1, 25a-b, 42a-e, 51, 52), un certain nombre d'entre eux faisant communiquer l'espace (7, 27, 71) intermédiaire avec au moins un canal (2, 3, 4, 34, 44, 61, 62, 65, 66) axial de manière à ce qu'un fluide gazeux ou liquide puisse s'écouler du canal (2, 3, 4, 34, 44, 61, 62, 65, 66) axial à l'espace intermédiaire ou inversement, **caractérisé par** au moins un canal radial qui est constitué en canal (9a-b, 74, 77) sans issue et qui ne ménage pas de communication avec un canal (2, 3, 4, 5, 34, 38, 44, 61, 62, 63, 64, 65, 66) axial.

2. Bloc (40) de piles à combustible suivant la revendication 1, **caractérisé en ce que** le canal (9a, 9b, 74, 77) sans issue se termine à proximité immédiate d'un canal (4, 5, 34, 38, 44, 61, 62, 65, 66) axial.

3. Bloc (40) de piles à combustible suivant la revendication 1 ou 2, **caractérisé en ce que** la distance entre l'extrémité du canal (9a, 9b, 74, 77,) sans issue et le canal (4, 5,34,38, 44, 61, 62, 65,66) est comprise entre 1 mm et 50 mm.

4. Bloc (40) de piles à combustible suivant la revendication 2 ou 3, **caractérisé en ce que** le canal (4, 34, 44, 61, 62, 65,66) axial communique avec l'espace (7, 27, 71) intermédiaire par au moins un canal (8a, 8b, 8c, 35, 43a-e, 72, 76) radial.

5. Bloc (40) de piles à combustible suivant la revendication 2 ou 3, **caractérisé en ce que** le canal (5, 38) axial ne communique pas avec un canal (8a, 8b, 8c, 35, 43a-e,72, 76) radial, mais est séparé d'une manière étanche au gaz de l'espace (7, 27) intermédiaire.

6. Bloc (40) de piles à combustible suivant la revendication 5, **caractérisé en ce que** le canal (5, 38) axial est séparé d'une manière étanche au gaz de tous les espaces (7, 27) intermédiaires du bloc de piles à combustible formés entre deux éléments (1, 25a-b, 42a-e, 51, 52) voisins.

7. Bloc (40) de piles à combustible suivant l'une des revendications 1 à 6, **caractérisé en ce que** les éléments (51, 52) formant l'espace (71) intermédiaire sont formés respectivement d'un sous-élément (51a) central et d'au moins un sous-élément (51b, 51c) périphérique, les canaux (61, 62, 63, 64, 65, 66) axial s'étendant à travers le sous -élément (51b, 51c) périphérique.

8. Bloc (40) de piles à combustible suivant l'une des revendications 1 à 7, **caractérisé en ce que** la section transversale respective d'au moins un canal (44) axial est différente dans des éléments (42a-e) différents de même type.

9. Bloc (40) de piles à combustible suivant l'une des revendications 1 à 8, **caractérisé en ce que** les éléments (1, 25a-b, 42a-e) formant l'espace (7, 27) intermédiaire, sont des plaques métalliques reliées entre elles.

10. Bloc (40) de piles à combustible suivant la revendication 9, **caractérisé en ce que** les plaques sont reliées entre elles par au moins un cordon (10, 26) de soudure.

11. Bloc (40) de piles à combustible suivant la revendication 10, **caractérisé en ce qu'**un cordon (10, 26) de soudure est disposé entre un canal (4, 5, 34, 38) axial est commuté du canal (9a, 9b) sans issue.

12. Bloc (40) de piles à combustible suivant la revendication 11, **caractérisé en ce qu'**au moins un canal (5, 38) axial est séparé d'une manière étanche au gaz de l'espace (7, 27) intermédiaire, par un cordon (10, 26) de soudure faisant le tour du canal (5, 38) axial.

13. Bloc (40) de piles à combustible, suivant l'une des revendications 1 à 12, **caractérisé en ce que** les plaques formant l'espace (7, 27) intermédiaire forme un élément (22, 41 a-e) de refroidissement).

14. Bloc (40) de piles à combustible suivant l'une des revendications 1 à 13, **caractérisé en ce que** l'espace (7, 27) intermédiaire est conçu pour faire passer de l'eau de refroidissement lorsque le bloc (40) de piles à combustible fonctionne.

15. Bloc (40) de piles à combustible suivant l'une des revendications 1 à 13, **caractérisé en ce que** l'espace (71) intermédiaire est conçu pour faire passer un gaz de fonctionnement lorsque le bloc de piles à combustible fonctionne.
